# DEMANDE DE BREVET EUROPEEN

(11) **EP 1 661 610 A1**
(43) Date de publication de la demande: **31.05.2006**
(21) Numéro de dépôt: 04380242.0
(22) Date de dépôt: 30.11.2004
(51) Int. Cl.: B01D 21/00, B01D 53/00

(54) **Procédé et usine de traitement des boues provenant de l'industrie sidérurgique**

(71) Demandeur: Insecsa Instalaciones de Secado, S.A., 20009 San Sebastian (Gipuzkoa) (ES)
(72) Inventeur: Maquin Lareaux, Gerard L. J., 20140 Andoain (Gipuzkoa) (ES)
(74) Mandataire: Urizar Barandiaran, Miguel Angel

(57) **Abrégé**

Procédé et usine de traitement de boues provenant de l'industrie sidérurgique caractérisés par le fait que dans une installation tubulaire fermée et isolée du point de vue thermique est versée une boue dont les composants essentiels sont l'eau, des composés à chaîne organique et des composés inorganiques métalliques; on procède au transport et au chauffage de la boue entre 200 et 400° C tout au long de l'installation tubulaire; les vapeurs qui se produisent à l'intérieur de l'installation tubulaire sont extraites; ces dernières sont refroidies à une température de refroidissement (t2) comprise entre 100° C et 200° C de sorte que les composés à chaîne organique se séparent par condensation des autres vapeurs, les composés inorganiques métalliques étant extraits secs par la sortie inférieure de l'installation tubulaire.

Application dans l'industrie métallurgique.

## Description

Dans l'industrie sidérurgique, il faut souligner les améliorations obtenues dans les processus de production, avec l'augmentation sensible des rendements, la réduction des écarts et des rejets, etc., ce qui contribue à optimiser la production et à réduire les impacts environnementaux.

La tendance est d'obtenir l'objectif "zéro résidus" dans l'industrie sidérurgique. Pour se faire, un recyclage interne et massif des sous-produits obtenus a été mis en oeuvre, après préparation le cas échéant. Tel est le cas des résidus de paille de laminage et d'aciérie qui posent un problème environnemental.

Le procédé et l'usine, objet de l'invention, sont développés afin d'offrir comme solution à ce problème environnemental, une alternative de traitement et de valorisation de la paille produite, par exemple après le processus de laminage des tubes sans soudure dans l'industrie sidérurgique dont l'objectif serait la production d'un produit utile à l'entreprise - matière première - et d'obtenir que le restant des résidus soit également réutilisable.

Il faut tenir compte du fait qu'une usine normale d'aciérie/laminage de tubes peut produire une quantité de boue supérieure à 2.500 T/an.

Les boues de l'industrie sidérurgique sont en général composées d'eau, de matière organique, d'huiles et de graisses ainsi que de matériaux métalliques comme des composés de calcium, magnésium, manganèse, etc. et de grandes quantités de fer.

Actuellement ces boues sont mélangées à de la chaux et amoncelées dans un terril.

Avec le procédé/installation, objet de l'invention, il y a une séparation en trois voies différentes des éléments suivants :
a) Les huiles/graisses et matière organique réutilisables (produits à chaîne organique)
b) Les matériaux métalliques avec le fer comme composé principal qui sont également réutilisables et
c) L'eau qui par exemple peut partir dans l'atmosphère en vapeur.

Le procédé de traitement de boues provenant de l'industrie sidérurgique, objet de la présente invention, est caractérisé particulièrement par le fait que :
a) dans une installation tubulaire fermée et isolée du point de vue thermique, on verse à l'entrée une boue dont les composants de base sont l'eau, des composés à chaîne organique et des composants inorganiques métalliques ;
b) on procède au transport de la boue tout au long de l'installation tubulaire et simultanément :
c) l'air de l'intérieur de l'installation tubulaire est chauffé à une température comprise entre 200° C et 400° C (200° C ≤ t1 ≤ 400° C) ;
d) les vapeurs qui se produisent à l'intérieur de l'installation tubulaire sont extraites; et
e) ces vapeurs descendent à une température de refroidissement comprise entre 100° C et 200° C de sorte que
f) les composés à chaîne organique se condensent, se séparant des autres vapeurs qui continuent en phase de vapeur ;
g) les composés inorganiques métalliques de la sortie de l'installation tubulaire soient extraits secs.

Pour mieux comprendre l'objet de la présente invention, une forme choisie de réalisation pratique est représentée sur les plans, susceptible de changements accessoires qui ne modifieront pas son fondement.

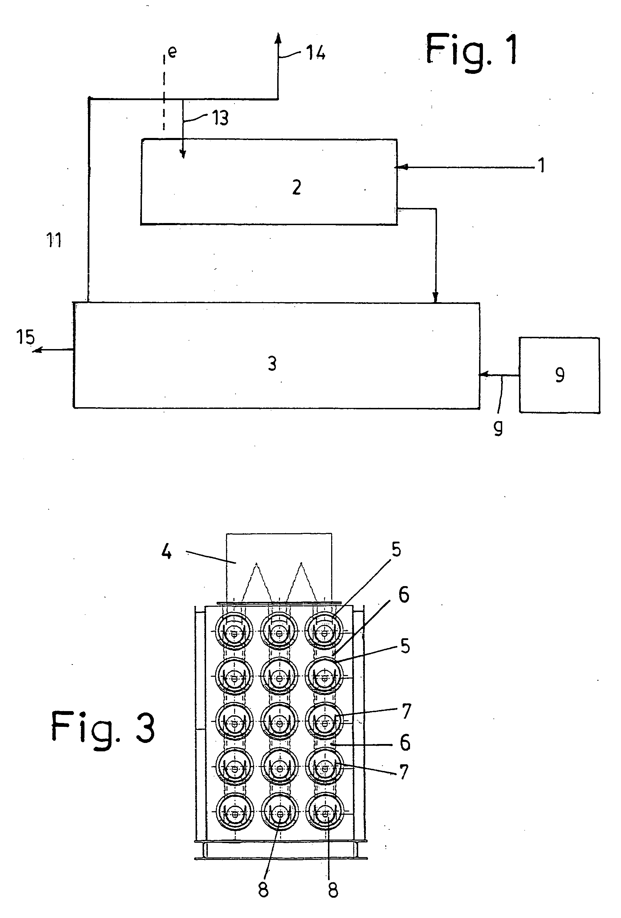

La figure 1 est un diagramme de blocs du procédé objet de l'invention.

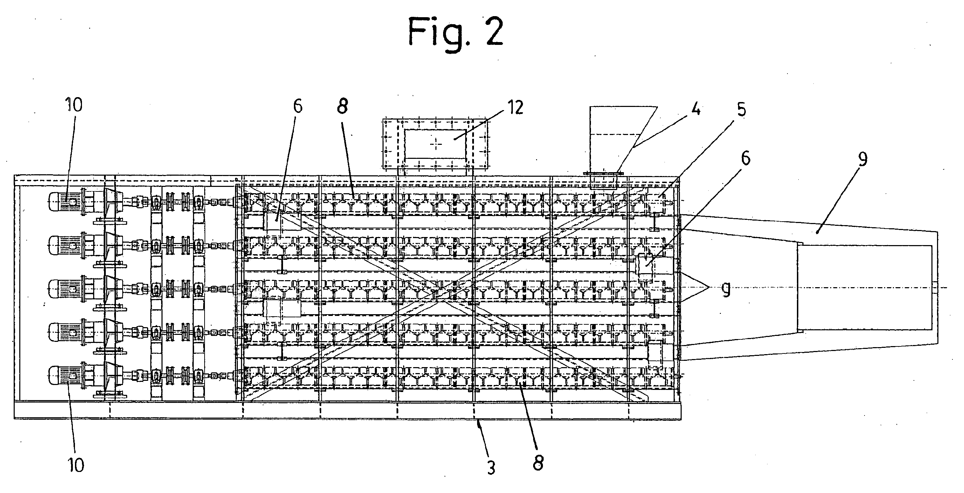

La figure 2 est une vue schématique en élévation d'une réalisation pratique de l'installation tubulaire objet de la présente invention.

La figure 3 est une vue latérale en coupe de la figure 2.

Un exemple de réalisation pratique non limitatif de la présente invention est décrit ci-dessous.

Une installation sidérurgique comme le laminage par exemple produit des boues (1) dont la composition peut être de 20 % d'eau qui une fois évaporée laisse un résidu liquide/solide de 20 % de matière organique, 20 % de graisses et huiles, 50 % de fer et oxydes et autres composés métalliques, c'est à dire 40 % de composés de chimie organique et 60 % de chimie inorganique.

Les boues (1) peuvent être retirées dans un réservoir/container (1) puis passées dans un doseur (4) posé dans la partie supérieure d'une installation tubulaire (3).

Avec cette réalisation, l'installation tubulaire (3) compte trois colonnes avec cinq niveaux de tubes (5) isolés du point de vue thermique.

Chaque colonne peut être indépendante des autres. Les tubes (5) de chaque colonne forme un tout en continuité et étanche. Les tubes (5) ont un conduit (6) de communication entre niveau.

Une goulotte (7) de préférence en U est disposée à l'intérieur de chaque tube (5) et séparée des parois du tube (5) pour permettre le passage des gaz de chauffe expliqués ci-après.

Une vis sans-fin (8) est posée dans la goulotte (7) qui mis en marche par un moteur (10) transporte la boue (1) à l'intérieur des tubes (5) de l'installation tubulaire (3). On dispose des moyens conventionnels pour réguler la vitesse de la vis sans-fin (8) en fonction du type de boues (1).

Un brûleur (9) à gaz par exemple est installé pour impulser avec un ventilateur les gaz de combustion (g) en principe le (CO₂) et (H₂O) à l'intérieur des tubes (5) de l'installation tubulaire (3) et fonctionnant dans ce cas dans le sens et à contre-sens du transport de boue (1) dans les tubes (5), mais de préférence à contre-sens.

On dispose de manière conventionnelle de capteurs de température et des moyens de contrôle du brûleur (9) pour que la température (t₁) des gaz de combustion à l'intérieur des tubes (5) se trouve entre 200° C et 400° C : 200° C ≤ t₁ ≤ 400° C et de préférence en situation de régime entre 300° C et 400° C : 300° C ≤ t₁ ≤ 400° C.

En raison de cette température (t₁), les boues (1) perdent dans leur course les composés vaporisables c'est à dire: l'eau et les composés à chaîne organique (matière organique + huiles/graisses) qui en se transformant en vapeur (11) sont extraits des tubes (5) par un conduit (12).

Le parcours des boues (1) à l'intérieur des tubes (5) et en contact avec les gaz de combustion (g) est compris entre 15 et 20 mètres environ, où les boues (1) sont alors séchées.

Dans ce cas, avec une installation de cinq niveaux, le gaz de combustion (g) entre dans les tubes (5) des niveaux 2, 3 et 4 qui avec une longueur de tube d'environ 5 mètres atteignent 15 mètres de parcours.

Les vapeurs (11) sont refroidies (11) à une température de refroidissement (t2) inférieure à la température de condensation (tc) des composés à chaîne organique, avec tc ≅ 200° C, les vapeurs à chaîne organique (13) qui peuvent repartir au container (2) initial ou autre pour être recyclé.

La température de refroidissement (t₂) doit être supérieure à la température de condensation de l'eau qui est de 100° C pour que l'eau ne condense pas et puisse être conduite comme vapeur (14) à l'endroit désiré.

La condensation des vapeurs (13) peut être effectuée par un des moyens connus, un condensateur à tubes radiants ou un rideau d'eau, etc.

On extrait de l'installation tubulaire (3) et du passage inférieur le résidu solide (15), en général de l'oxyde de fer avec une granulométrie et des propriétés excellentes pour l'utiliser comme matière première.

### Exemple :

On part d'une boue (1) provenant de la fabrication de tubes avec la composition suivante comparative entre la boue initiale (1) et les résidus solides (15) qui sont extraits de l'installation (3) après le procédé objet de l'invention:

**Composition comparative**

| | Boues (1) | Résidus solides (15) |
|---|---|---|
| Humidité | 27 % | 0'1 % |

| Paramètres dans le solide | | |
|---|---|---|
| Matière organique | 20'9 % | 1'03 % |
| Huiles et graisses | 20'1 % | 1'52 % |
| Composés métalliques | 59 % | 97'45 % |

## Revendications

1. Procédé de traitement de boues provenant de l'industrie sidérurgique **caractérisé par le fait que**:
a) une boue est versée dans une installation tubulaire fermée et isolée du point de vue thermique, avec des composants essentiels comme l'eau, des composés à chaîne organique et des composés inorganiques métalliques;
b) on procède au transport de la boue tout au long de l'installation tubulaire et simultanément
c) l'air de l'intérieur de l'installation tubulaire est chauffé à une température comprise entre 200° C et 400° C (200° C ≤ t1 ≤ 400° C) ;
d) les vapeurs qui se produisent à l'intérieur de l'installation tubulaire sont extraites; et
e) ces vapeurs descendent à une température de refroidissement comprise entre 100° C et 200° C de sorte que
f) les composés à chaîne organique se condensent, se séparant des autres vapeurs qui continuent en phase de vapeur ;
g) les composés inorganiques métalliques de la sortie de l'installation tubulaire sont extraits secs.

2. Procédé de traitement de boues provenant de l'industrie sidérurgique, selon la revendication précédente, **caractérisé par le fait que** l'installation tubulaire se compose de tubes en continu munis à l'intérieur d'une goulotte séparée du tube et munie à son tour d'une vis sans-fin intérieure pour transporter la boue.

3. Procédé de traitement de boues provenant de l'industrie sidérurgique, selon la deuxième revendication, **caractérisé par le fait que** les tubes en continu sont constitués en niveaux.

4. Procédé de traitement de boues provenant de l'industrie sidérurgique, selon la première revendication, **caractérisé par le fait que** l'air de l'intérieur de l'installation tubulaire est chauffé avec des gaz provenant de combustion.

5. Procédé de traitement de boues provenant de l'industrie sidérurgique, selon la première revendication, **caractérisé par le fait que** les vapeurs sont refroidies au moyen d'un rideau d'eau.

6. Usine de traitement de boues provenant de l'industrie sidérurgique **caractérisée par le fait qu'**elle est composée de:
a) une installation tubulaire fermée et isolée du point de vue thermique où est versée une boue dont les composants essentiels sont l'eau, des composés à chaîne organique et des composés inorganiques métalliques ;
b) des moyens pour le transport de la boue tout au long de l'installation tubulaire;
c) des moyens pour chauffer l'air de l'intérieur de l'installation tubulaire à une température (t₁) comprise entre 200° C et 400° C : 200° C ≤ t₁ ≤ 400° C ;
d) des moyens pour extraire les vapeurs qui se produisent à l'intérieur de l'installation tubulaire et
e) des moyens pour refroidir ces vapeurs à une température de refroidissement (t₂) comprise entre 100° C et 200° C de sorte que les composés de chimie organique se condensent se séparant des autres vapeurs qui restent en leur état;
f) des moyens pour extraire de la sortie de l'installation tubulaire les résidus secs qui sont des composés inorganiques métalliques.

7. Usine de traitement de boues provenant de l'industrie sidérurgique, selon la sixième revendication **caractérisée par le fait que** l'installation est composée de tubes en continu avec une goulotte intérieure séparée du tube munie d'une vis sans-fin pour le transport de la boue.

8. Usine de traitement de boues provenant de l'industrie sidérurgique, selon la septième revendication **caractérisée par le fait que** les tubes en continu sont constitués en niveaux.

9. Usine de traitement de boues provenant de l'industrie sidérurgique, selon la sixième revendication **caractérisée par le fait que** les moyens pour chauffer l'air à l'intérieur de l'installation tubulaire disposent d'un brûleur à gaz dont les gaz de combustion sont introduits dans l'installation tubulaire.
